# EUROPÄISCHE PATENTSCHRIFT

(11) **EP 0 662 793 B1**
(45) Veröffentlichungstag und Bekanntmachung des Hinweises auf die Patenterteilung: **09.04.1997**
(21) Anmeldenummer: 93920706.4
(22) Anmeldetag: 13.09.1993
(51) Int. Cl.: A46B 13/00, B60S 3/06, B64F 5/00

(54) **BÜRSTENKOPF ZUR REINIGUNG VON OBERFLÄCHEN**
BRUSH HEAD FOR CLEANING SURFACES
TETE A BROSSE POUR LE NETTOYAGE DE SURFACES

(30) Priorität: 02.10.1992 DE 4233161
(43) Veröffentlichungstag der Anmeldung: 19.07.1995
(73) Patentinhaber: PUTZMEISTER-WERK MASCHINENFABRIK GMBH, 72631 Aichtal (DE)
(72) Erfinder: WANNER, Martin, D-70599 Stuttgart (DE); MAIER, Dieter, D-72124 Pliezhausen (DE); BIRK, Gerhard, D-70178 Stuttgart (DE)
(74) Vertreter: Wolf, Eckhard, Dr.-Ing.
(86) Internationale Anmeldenummer: EP9302467
(87) Internationale Veröffentlichungsnummer: WO9407389

(56) Entgegenhaltungen:
- EP-A- 0 404 684
- DE-A- 4 035 519
- US-A- 4 207 642

## Beschreibung

Die Erfindung betrifft einen Bürstenkopf, insbesondere zur Reinigung von Großobjekten, wie Flugzeuge, mit einer motorisch in vorgegebener Drehrichtung angetriebenen, einen Borstenkranz aus fliehkraftgetragenen biegeweichen Borsten tragenden und mit den Borsten gegen eine zu reinigende Oberfläche einwirkenden Bürstenwalze, und mit mindestens einem innerhalb des Borstenkranzes vertieft angeordneten, relativ zur Bürstenwalze verschieb- oder verschwenkbar angeordneten, steifelastische Tastorgane aufweisenden Berührungssensor.

In der DE-A1-40 35 519 ist bereits vorgeschlagen worden, einen Großmanipulator mit einem fernsteuerbaren Bürstenkopf auszustatten. Der bekannte Großmanipulator weist einen aus mehreren an ihren Enden gegeneinander verschwenkbaren Auslegern zusammengesetzten Knickmast auf, dessen Grundausleger an einem auf einem Fahrgestell angeordneten Lagerbock um eine vertikale Achse drehbar gelagert ist und dessen Endausleger ein mit dem Bürstenkopf bestückbares Multigelenk aufweist. Aus dieser Druckschrift ist es auch bekannt, die Bürstenwalzen und deren Tragkörper aus drei axial voneinander getrennten, über voneinander unabhängige Drehmomentaufnehmer auf einer Bürstenwelle gelagerten Walzensektionen zusammenzusetzen, die eine regelbare Ausrichtung der Bürstenwalze gegenüber einer zu bearbeitenden Oberfläche nach Maßgabe der Differenz der zwischen den äußeren Walzensektionen beim Reinigungsvorgang gemessenen Drehmomente ermöglicht. Mit diesen Maßnahmen ist es jedoch noch nicht mit Sicherheit möglich, Beschädigungen der zu reinigenden Oberfläche zu vermeiden.

Zur Vermeidung dieser Nachteile ist es bei einem Bürstenkopf der eingangs angegebenen Art bekannt (US-A-4 207 642), innerhalb des Borstenkranzes einen Berührungssensor vorzusehen, der relativ zur Bürstenwalze verschieb- oder verschwenkbar angeordnete, steifelastische Tastorgane aufweist. Die Tastorgane sind dort mit ihrer Basis an verschiedenen Stellen der stationären Bürstenachse befestigt. Sie sind als flexible Kontaktdrähte ausgebildet, die an ihren äußeren Enden mit einem gummielastischen Überzug versehen sind und an ihrer Basis im Bereich der Bürstenachse elastisch festgehalten sind. Bei einem anderen Bürstenkopf der eingangs angegebenen Art (EP-A-0 404 684) sind die Sensoren an einem stationären Bürstenträger angelenkt und greifen mit ihrem freien gebogenen Ende in die Zwischenräume zwischen verschiedenen Bürstensektionen ein. Bei beiden vorbekannten Bürstenköpfen ist eine zuverlässige Funktion der Berührungssensoren nur dann gewährleistet, wenn der Bürstenkopf in bezug auf die Fixpunkte der Sensoren gegenüber der zu reinigenden Oberfläche ausgerichtet sind. Dies bedeutet, daß die Ansprechempfindlichkeit der Berührungssensoren über den Umfang des Bürstenkopfes variiert. Es kann daher vorkommen, daß die Sensoren bei ungünstiger Ausrichtung des Bürstenkopfes gegenüber der zu reinigenden Oberfläche nicht oder nur bei überhöhter Anpreßkraft ansprechen. Die bekannten Berührungssensoren sind daher für eine Notabschaltung nicht geeignet.

Der Erfindung liegt daher die Aufgabe zugrunde, einen Bürstenkopf der eingangs angegebenen Art zu entwickeln, der in kritischen Situationen eine Notabschaltung von Antriebsaggregaten ermöglicht, um Beschädigungen der zu reinigenden Oberfläche zu vermeiden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß bei Erreichen einer vorgegebenen Eindringtiefe eine Notabschaltung des den Bürstenkopf tragenden Manipulators erfolgt, so daß auch ein Nachlauf des Bürstenkopfes abgefangen werden kann. Um dies zu erreichen, wird gemäß der Erfindung vorgeschlagen, daß der Berührungssensor einen mit der Bürstenwalze mitgedrehten, mit den als Büschel aus steifelastischen Tastborsten ausgebildeten Tastorganen bestückten Tastborstenträger und ein durch eine Radialbewegung des Tastborstenträgers betätigbares Schaltorgan zur Auslösung einer Notabschaltung von Antriebsaggregaten aufweist. Die Tastborsten sind dabei zweckmäßig kürzer, vorzugsweise etwa halb so lang wie die biegeweichen Borsten des an der Bürstenwalze angeordneten Borstenkranzes.

Um Fehlfunktionen des Berührungssensors zu vermeiden, weist der Berührungssensor gemäß einer bevorzugten Ausgestaltung der Erfindung einen auf eine radiale Ansprechkraft einstellbaren Schwellenwertschalter zur Auslösung eines Not-Aus-Signals auf.

Eine weitere bevorzugte Ausgestaltung der Erfindung sieht vor, daß der Tastborstenträger einen vorzugsweise federbelasteteten Gegenhalter zur Einstellung der Ansprechkraft des Schaltorgans aufweist, während das Schaltorgan als radial innerhalb des Tastborstenträgers angeordneter Mikroschalter zur Auslösung des Not-Aus-Signals ausgebildet sein kann. Zur Verstellung des Schaltwegs und damit auch der Ansprechempfindlichkeit kann am Tastborstenträger ein radial verstellbares Betätigungsorgan für das Schaltorgan vorgesehen werden.

Eine weitere vorteilhafte Ausgestaltung der Erfindung sieht vor, daß der Tastborstenträger als sich über einen Teilumfang der Bürstenwalze erstreckender, um eine zur Drehachse parallele Achse relativ zur Bürstenwalze entgegen der vorzugsweise einstellbaren Kraft der Gegenhaltefeder gegen das Schaltorgan begrenzt verschwenkbarer Hebel ausgebildet ist, der in Umfangsrichtung der Bürstenwalze gekrümmt sein kann.

In konstruktiver Hinsicht läßt sich dies dadurch verwirklichen, daß die Bürstenwalze konzentrisch zu einer motorisch in Drehrichtung angetriebenen Bürstenwelle angeordnet und mit dieser durch in Umfangsrichtung verteilt angeordnete, in axialer und radialer Richtung steife und vorzugsweise in Umfangsrichtung nachgiebige radiale Abstandshalter verbunden ist, während auf der angetriebenen Bürstenwelle zusätzlich mindestens eine zur Drehachse normale Tragplatte getrennt von der Bürstenwalze radial überstehend angeordnet ist, an deren Umfang der Tragborstenträger vorzugsweise in einer dort vorgesehenen Halteschiene radial verschiebbar oder um eine zur Drehachse der Bürstenwelle parallele Achse begrenzt verschwenkbar angelenkt ist. Das Schaltorgan kann dabei starr mit der Tragplatte oder der Halteschiene verbunden sein. Die Halteschiene weist zweckmäßig ein radial nach außen offenes, U-förmiges Innenprofil auf, während der Tastborstenträger einen dem Innenprofil der Halteschiene angepaßtes Außenprofil aufweisen kann. Vorteilhafterweise ist der sich in Umfangsrichtung erstreckende Tastborstenträger in der Nähe seines einen Endes an der Halteschiene angelenkt, während er in der Nähe seines anderen Endes über die Gegenhaltefeder mit einstellbarer Vorspannung gegen einen äußeren Begrenzungsanschlag der Halteschiene abgestützt ist. Die Schwenkachse des Tastborstenträgers ist dabei bevorzugt in Drehrichtung vor dem Betätigungsorgan und vor der zugehörigen Gegenhaltefeder angeordnet, wobei das Betätigungsorgan etwa mittig zwischen der Schwenkachse und der Gegenhaltefeder auf dem Tastborstenträger angeordnet sein kann. Das Vorzugsweise als Mikroschalter oder als induktiver Schalter ausgebildete Schaltorgan ist zweckmäßig an der Tragplatte befestigt, während das am Tastborstenträger angeordnete Betätigungsorgan durch einen Bodendurchbruch der Halteschiene zum Schaltorgan hindurchgreift.

Eine weitere vorteilhafte Ausgestaltung der Erfindung sieht vor, daß mindestens zwei, vorzugsweise zwei bis vier über den Umfang der Bürstenwalze oder der Tragplatte verteilt angeordnete, segmentartig ausgebildete Tastborstenträger vorgesehen sind. Dementsprechend können auch mehrere, am Umfang der Tragplatte nach außen offene, sich zu einem Ring ergänzende Halteschienen zur Aufnahme der Tragborstenträger vorgesehen werden.

Weiter ist es von Vorteil, wenn die Bürstenwalze aus mindestens zwei, vorzugsweise aus drei oder vier axial miteinander verbundenen, mit je einem Borstenkranz bestückten Walzensektionen zusammengesetzt ist, und wenn im Trennbereich zwischen zwei Walzensektionen und in der Nähe der freien Enden der Bürstenwalze jeweils ein gegebenenfalls auf einer Tragplatte angeordneter Tragborstenträger oder ein aus mehreren Tragborstenträgern zusammengesetzter Tragborstenring mit den zugehörigen Schaltorganen angeordnet ist.

Im folgenden wird die Erfindung anhand eines in der Zeichnung in schematischer Weise dargestellten Ausführungsbeispiels näher erläutert. Es zeigen
- Fig. 1: eine Seitenansicht eines fahrbaren Großmanipulators mit Knickmast, Multigelenk und Bürstenkopf in eingeklappter Stellung;
- Fig. 2a: einen Schnitt durch einen Bürstenkopf in vergrößerter Darstellung;
- Fig. 2b: eine Draufsicht auf einen Tastborstenring des Bürstenkopfs nach Fig. 2a;
- Fig. 2c: einen Längsschnitt durch eien Walzensektion;
- Fig. 2d: eine Stirnseitenansicht einer Walzensektion;
- Fig. 3a: eine Draufsicht auf ein abgewandeltes Ausführungsbeispiel eines Tastborstenrings;
- Fig. 3b: einen vergrößerten Ausschnitt aus dem Tastborstenring nach Fig. 3a;
- Fig. 3c: einen Schnitt durch den Umfangsbereich des Tastborstenrings nach Fig. 3b in ausschnittsweiser vergrößerter Darstellung;
- Fig. 4: eine Draufsicht auf einen gegenüber Fig. 3a abgewandelten Tastborstenring.

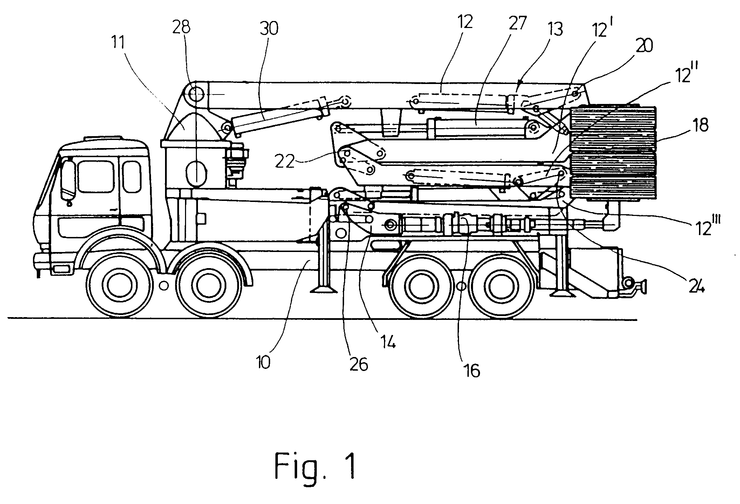

Der in Fig. 1 dargestellte mobile Großmanipulator besteht im wesentlichen aus einem auf einem Drehlagerbock 11 eines motorgetriebenen Fahrgestells 10 mit seinem Grundausleger 12 um eine vertikale Achse drehbar gelagerten Knickmast 13, einem am Endausleger 14 des Knickmasts 13 angeordneten Multigelenk 16 und einem am freien Ende des Multigelenks lösbar befestigten Bürstenkopf 18. Die fünf Ausleger 12,12',12'',12''' und 14 des Knickmasts 13 sind an ihren einander zugewandten Enden an Gelenken 20,22,24,26 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydroantriebs 30 schwenkbar am Drehlagerbock 11 gelagert. In der in Fig. 1 gezeigten Stellung sind die Ausleger des Knickmasts 13 in ihrem zu Transportzwecken zusammengefalteten Zustand dargestellt.

Die vorbeschriebene Anordnung ermöglicht es, mit dem Bürstenkopf 18 beliebige Oberflächenkonturen innerhalb der von den Auslegern aufgespannten Ebene abzufahren. Mit Hilfe des motorisch verstellbaren Multigelenks 16 ist es zudem möglich, den Bürstenkopf 18 um mehrere Dreh- und Schubachsen gegenüber dem Endausleger 14 zu bewegen.

Der Bürstenkopf 18 weist einen am Multigelenk 16 lösbar befestigten Träger 40 auf, der über ein Drehlager 42 mit einer über einen Hydromotor 44 angetriebenen Waschbürste 46 verbunden ist. Die Waschbürste 46 besteht ihrerseits aus vier Bürstensektionen 48',48'',48''',48^{IV}, die durch eine Zugstange 50 miteinander und über eine Kardanwelle 52 mit der Antriebswelle 54 des Hydromotors verbunden sind. Die Bürstensektionen sind aus je einer inneren, hohlzylindrischen Wellensektion 56 und einer zu dieser konzentrisch angeordneten äußeren Walzensektion 58 zusammengesetzt, die durch mehrere, im Winkelabstand voneinander angeordnete, radial und axial ausgedehnte dünnwandige Abstandshalter 60 aus Metallblech miteinander verbunden sind. Die Abstandshalter 60 sind an einander radial zugewandten Stegleisten 62 der Wellensektionen 56 und der Walzensektionen 58 mittels Schraubenreihen 64 befestigt. Die dünnwandigen Abstandshalter 60 bilden in axialer und radialer Richtung eine extrem steife und in Umfangsrichtung eine weiche Verbindung zwischen den Walzen- und Wellensektionen. Dadurch sind die Walzen- und Wellensektionen 56,58 in Umfangsrichtung gegeneinander definiert tordierbar.

Auf der Außenseite der Walzensektionen 58 ist jeweils ein sich über die Gesamtlänge erstreckender Borstenkranz 66 aus biegeweichen Borsten 104 angeordnet, die bei drehender Waschbürste unter der Einwirkung der Zentrifugalkraft radial nach außen weisen.

Am Umfang der Wellensektionen 56 sind zwei einander diametral gegenüberliegende Wägezellen 68 starr angeordnet, die über ein entgegen der Drehrichtung der Waschbürste ausgerichtetes, biegeweiches Zugglied 70 im wesentlichen tangential mit der zugehörigen Walzensektion 58 verbunden sind. Die Wägezellen 68 enthalten eine nicht dargestellte Meßbrücke mit einem Dehnmeßstreifen, der unter der Einwirkung einer am Zugglied 70 angreifenden Kraft ein kraftproportionales Meßsignal abgibt. Die Meßsignale werden in Meßumformern 72, die im Inneren der Wellensektionen 56 angeordnet sind, verstärkt und in dieser Form über Schleifkontakte 74 an eine externe Auswerteelektronik weitergeleitet. Die durch Zugstangen 50 miteinander verbundenen Bürstensektionen 48',48'',48'',48^{IV} stützen sich mit ihren Wellensektionen 56 an Zwischenringen 100 so gegenseitig ab, daß sie zum Ausgleich von Unwuchten gegenseitig verdreht werden können. Die Wellensektionen 56 bilden somit eine durchgehende Bürstenwelle, während die Walzensektionen 58 mit ihren Borstenkränzen 66 sich zu einer Bürstenwalze ergänzen.

Die Verteilung der Waschflüssigkeit erfolgt über Flüssigkeitsleitungen 78, die sich achsparallel entlang den Wellensektionen 56 erstrecken und die über flexible Schlauchstücke 80 paarweise über die Wellensektionen 56 hinweg miteinander und mit einer äußeren Zuführleitung verbunden sind. Von den Flüssigkeitsleitungen 78 zweigen außerdem radiale Sprühleitungen 82 ab, die über Sprühdüsen 84 in den Borstenkranz 66 münden und diesen von innen her mit Waschflüssigkeit versorgen.

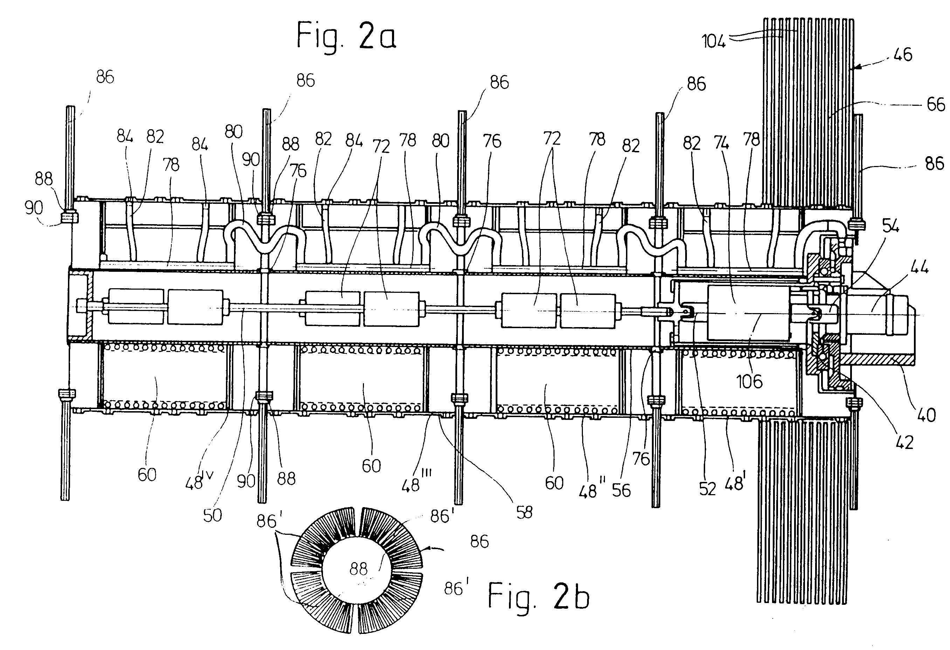

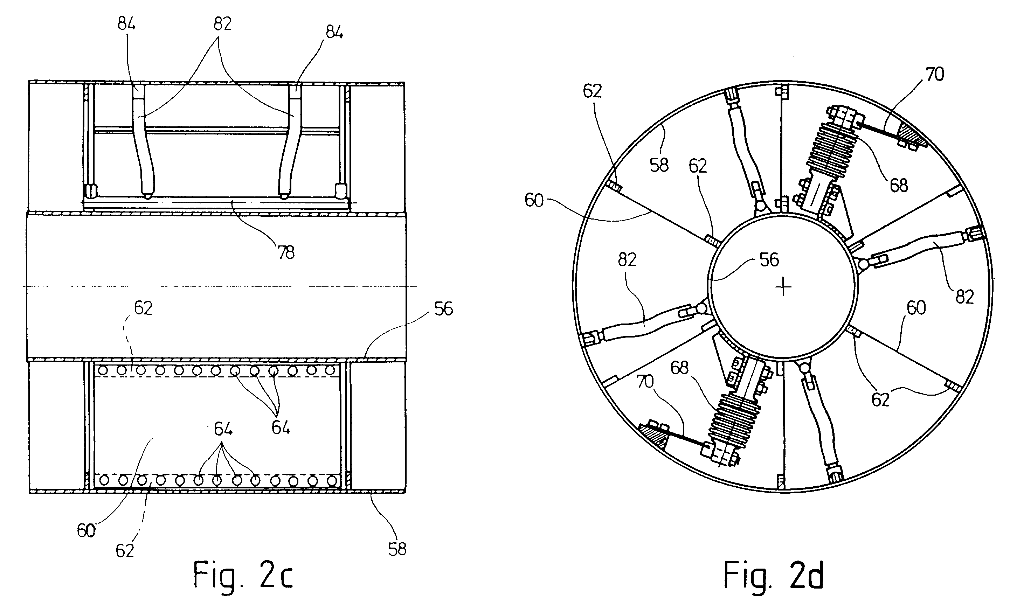

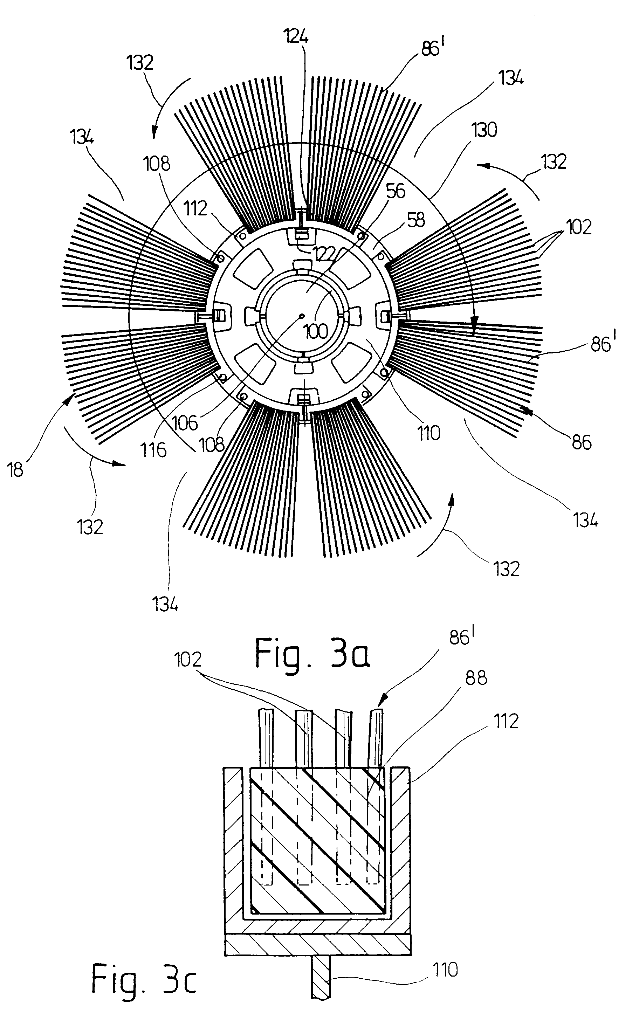

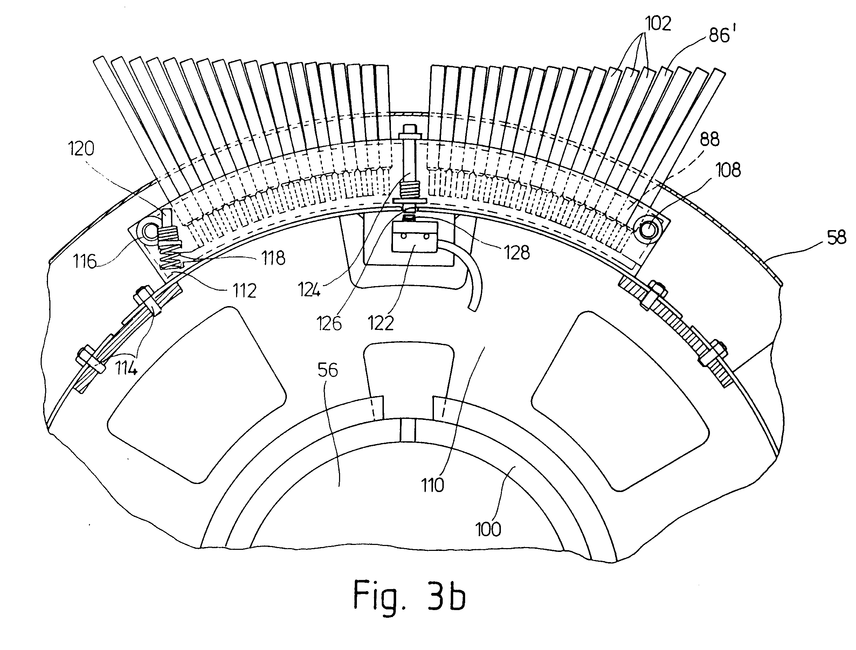

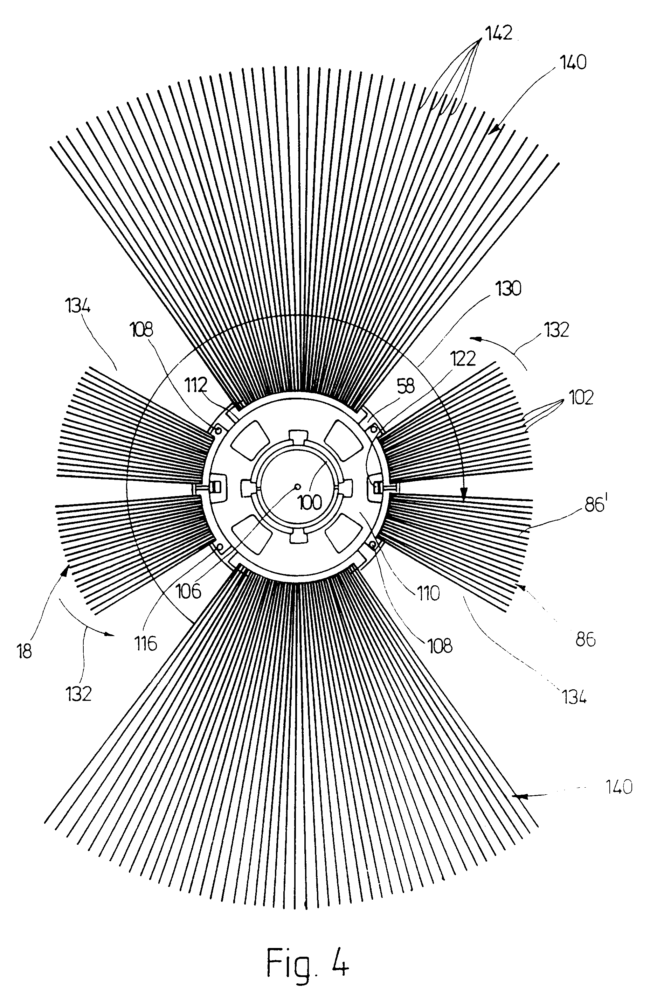

An den stirnseitigen Enden der Waschbürste 46 und im Trennbereich zwischen zwei Walzensektionen 58 ist jeweils ein Tastborstenring 86 angeordnet, der in zwei (Fig. 4) bzw. vier (Fig. 2b und 3a) als Berührungssensoren ausgebildete Segmente 86' unterteilt ist. Die Tastborsten 102 sind kürzer als die Borsten 104 des Borstenkranzes 66. Sie sind segmentweise mit einem Tastborstenträger 88 verbunden, der bei dem Ausführungsbeispiel nach Fig. 2a in einer Radialführung 90 und bei dem Ausführungsbeispiel nach Fig. 3a bis c um eine zur Drehachse 106 der Bürstenwalze parallele Achse 108 schwenkbar am Umfang einer Tragplatte 110 angeordnet ist.

Die Tragplatten 110 sind getrennt von den Walzensektionen 58 über die Zwischenringe 100 starr mit der Bürstenwelle bzw. den Wellensektionen 56 verbunden und sind senkrecht zur Drehachse 108 ausgerichtet. An ihrem Umfang sind vier im Querschnitt U-förmige, nach außen offene, in Umfangsrichtung segmentartig gekrümmte Halteschienen 112 mittels Gewindebolzen 114 befestigt, in denen jeweils einer der Tastborstenträger 88 nach Art eines Hebels um die Achse 108 zwischen den beiden durch die Enden des Langlochs 116 gebildeten Anschläge begrenzt verschwenkbar ist. Eine zwischen der Halteschiene 112 und dem Tastborstenträger 188 abgestützte Gegenhaltefeder 118 sorgt dafür, daß der Tastborstenträger 188 in Ruhestellung gegen den radial außen liegenden Anschlag innerhalb des Langlochs 116 unter Vorspannung angepreßt wird. Die Vorspannung der Feder kann dabei über die Stellschraube 120 eingestellt werden. Im mittleren Bereich zwischen der Schwenkachse 108 und dem Langloch 116 befindet sich an der Tragplatte 110 ein Mikroschalter 122 und am Tastborstenträger 88 ein Betätigungsstößel 124, der beim Verschwenken des Tastborstenträgers 88 durch einen Durchbruch 126 im Boden der Halteschiene 112 hindurch gegen das Betätigungsorgan 128 des Mikroschalters nach innen verschiebbar ist.

Bei dem in Fig. 4 gezeigten Ausführungsbeispiel ist auf dem Tastborstenring zwischen jeweils zwei Tastborstensegmenten 86' ein Segment 140 aus biegeweichen Reinigungsborsten 142 angeordnet, die gleich lang wie die Reinigungsborsten auf den Borstenkränzen 66 sind. Dadurch wird erreicht, daß zwischen den Borstenkränzen 66 keine Reinigungslücken entstehen, die zu einer Streifenbildung beim Reinigungsvorgang führen könnten.

Die Tastborstenträger 88 werden unter der Einwirkung der Gegenhaltefedern 118 und der Zentrifugalkraft der drehenden Waschbürste 46 zusammen mit ihren Tastborsten 102 in der Radialführung 90 bzw. um die Achse 108 nach außen bewegt und können unter der Einwirkung einer von außen auf die Tastborsten 102 wirkenden Radialkraft unter Überwindung der Zentrifugalkraft und der Kraft der Gegenfeder 118 segmentweise gegen den Mikroschalter 122 zur Auslösung eines Not-Aus-Signals verschoben werden. Wie aus Fig. 4 zu ersehen ist, werden bei der durch den Pfeil 130 angedeuteten Drehrichtung der Bürstenwalze 46 die Tastborsten im Kollisionsfall in Richtung der Pfeile 132 ausgelenkt, so daß sie auf die zugehörigen Tastborstenträger 88 ein radial nach innen gerichtetes Drehmoment um die Schwenkachse 108 ausüben. Es hat sich daher als zweckmäßig erwiesen, die Schwenkachse 108 an dem in Drehrichtung 130 vorderen Ende der Tastborstenträger 88 und die Gegenhaltefeder 118 an deren rückwärtigem Ende anzuordnen. Die Empfindlichkeit des Schaltvorgangs kann über die Stellschraube 120 und der Schaltpunkt durch radiales Verstellen des Betätigungsorgans 124 den Anforderungen des konkreten Anwendungsfalles entsprechend eingestellt werden. Zwischen den einzelnen Tastborstenträgern befindet sich ein Freiraum 134, in den die Tastborsten 102 in Richtung der Pfeile 132 frei eingebogen werden können.

Mit den steif elastischen Tastborsten können Beschädigungen am Flugzeug durch Auslösung des Not-Aus-Signals so verhindert werden, daß auch ein unvermeidbarer Nachlauf des Bürstenkopfes abgefangen werden kann. Beim Eintauchen in den Borstenkranz wird von den Tastborsten eine Kraft auf den Tastborstenträger ausgeübt. Ziel ist es nun, die in dem System wirkenden Kräfte optimal aufeinander abzustimmen, nämlich die radial nach außen wirkenden Kräfte:
- Fliehkraft auf Tastborsten und Tastborstenträger
- Federkraft des Gegenhalters
und die nach innen wirkenden Kräfte:
- von der Oberfläche auf die Tastborsten wirkende Kräfte, die abhängig von der Steifigkeit der Tastborsten und der Eindringtiefe sind.

Sonstige Kräfte, die durch die Bewegung des Manipulators, durch Beschleunigungen oder Verzögerungen oder durch einen unruhigen Lauf des Waschbürstenmotors hervorgerufen werden, dürfen nicht zum Auslösen des Not-Aus führen.

Zusammenfassend ist folgendes festzustellen: Die Erfindung betrifft einen Bürstenkopf für Großmanipulatoren zur Reinigung von Großobjekten, wie Flugzeuge. Der Bürstenkopf 18 weist eine motorisch in vorgegebener Drehrichtung 130 angetriebene, einen Borstenkranz 66 aus fliehkraftgetragenen biegeweichen Borsten 104 tragende und mit den Borsten 104 gegen eine zu reinigende Oberfläche einwirkende Bürstenwalze 58 auf. Um bei unvermeidlichen Störfällen eine Beschädigung der zu reinigenden Oberfläche zu vermeiden, ist gemäß der Erfindung mindestens ein vorzugsweise mit der Bürstenwalze 58 mitdrehender, innerhalb des Borstenkranzes 66 vertieft angeordneter Berührungssensor 88 zur Auslösung einer Notabschaltung von Antriebsaggregaten des Bürstenkopfs 18 vorgesehen.

## Patentansprüche

1. Bürstenkopf mit einer motorisch in vorgegebener Drehrichtung (130) angetriebenen, einen Borstenkranz (66) aus fliehkraftgetragenen, biegeweichen Borsten (104) tragenden und mit den Borsten (104) gegen eine zu reinigende Oberfläche einwirkenden Bürstenwalze (46), und mit mindestens einem innerhalb des Borstenkranzes (66) vertieft angeordneten, relativ zur Bürstenwalze (46) verschieb- oder verschwenkbar angeordneten, steifelastische Tastorgane (102) aufweisenden Berührungssensor (86, 88), **dadurch gekennzeichnet**, daß der Berührungssensor (86,88) einen mit der Bürstenwalze mitgedrehten, mit den als Büschel aus steifelastischen Tastborsten (102) ausgebildeten Tastorganen bestückten Tastborstenträger (88) und ein durch eine Radialbewegung des Tastborstenträgers (88) betätigbares Schaltorgan (122) zur Auslösung einer Notabschaltung von Antriebsaggregaten aufweist.

2. Bürstenkopf nach Anspruch 1, **dadurch gekennzeichnet**, daß der Berührungssensor (86,88) einen auf eine radiale Ansprechkraft einstellbaren Schwellenwertschalter zur Auslösung eines Not-Aus-Signals aufweist.

3. Bürstenkopf nach Anspruch 1 oder 2, **dadurch gekennzeichnet**, daß die Tastborsten (102) kürzer als, vorzugsweise etwa halb so lang wie die biegeweichen Borsten (104) des Borstenkranzes (66) sind.

4. Bürstenkopf nach einem der Ansprüche 1 bis 3, **dadurch gekennzeichnet**, daß der Tastborstenträger (88) einen vorzugsweise federbelasteten Gegenhalter (118) zur Einstellung der Ansprechkraft des Berührungssensors aufweist.

5. Bürstenkopf nach einem der Ansprüche 1 bis 4, **dadurch gekennzeichnet**, daß das Schaltorgan als radial innerhalb des Tastborstenträgers (88) angeordneter Mikroschalter (122) ausgebildet ist.

6. Bürstenkopf nach Anspruch 5, **dadurch gekennzeichnet**, daß der Tastborstenträger (88) ein radial verstellbares Betätigungsorgan (124) für das Schaltorgan (122) trägt.

7. Bürstenkopf nach einem der Ansprüche 2 bis 6, **dadurch gekennzeichnet**, daß der Tastborstenträger (88) als sich über einen Teilumfang der Bürstenwalze (58) erstreckender, um eine zu deren Drehachse (106) parallele Achse (108) relativ zur Bürstenwalze entgegen der vorzugsweise einstellbaren Kraft einer Gegenhaltefeder (118) gegen das Schaltorgan (122) begrenzt verschwenkbarer Hebel ausgebildet ist.

8. Bürstenkopf nach Anspruch 7, **dadurch gekennzeichnet**, daß der Tastborstenträger (88) in Umfangsrichtung der Bürstenwalze (58) gekrümmt ist.

9. Bürstenkopf nach einem der Ansprüche 1 bis 8, **dadurch gekennzeichnet**, daß die Bürstenwalze (58) konzentrisch zu einer motorisch in Drehrichtung (132) angetriebenen Bürstenwelle (56) angeordnet und mit dieser durch in Umfangsrichtung verteilt angeordnete, in axialer und radialer Richtung steife und vorzugsweise in Umfangsrichtung nachgiebige radiale Abstandshalter (60) verbunden ist, daR auf der angetriebenen Bürstenwelle (56) mindestens eine Tragplatte (110) getrennt von der Bürstenwalze (58) radial überstehend angeordnet ist, auf deren Umfang der Tastborstenträger (88) vorzugsweise in einer dort vorgesehenen Halteschiene (112) radial verschiebbar oder um eine zur Drehachse (106) der Bürstenwelle (56) parallele Achse (108) begrenzt verschwenkbar angelenkt ist.

10. Bürstenkopf nach Anspruch 9, **dadurch gekennzeichnet**, daß das Schaltorgan (122) starr mit der Tragplatte (110) verbunden ist.

11. Bürstenkopf nach Anspruch 9 oder 10, **dadurch gekennzeichnet**, daß die Halteschiene (112) ein radial nach außen offenes, U-förmiges Innenprofil aufweist.

12. Bürstenkopf nach Anspruch 11, **dadurch gekennzeichnet**, daß der Tastborstenträger (88) ein dem Innenprofil der Halteschiene (112) angepaßtes Außenprofil aufweist.

13. Bürstenkopf nach einem der Ansprüche 9 bis 12, **dadurch gekennzeichnet**, daß der sich in Umfangsrichtung erstreckende Tastborstenträger (88) in der Nähe seines einen Endes (108) an der Halteschiene angelenkt und in der Nähe seines anderen Endes über die Gegenhaltefeder (118) mit verstellbarer Vorspannung gegen einen äußeren Begrenzungsanschlag (116) der Halteschiene (112) abgestützt ist.

14. Bürstenkopf nach Anspruch 13, **dadurch gekennzeichnet,** daß die Schwenkachse (108) des Tastborstenträgers (88) in Drehrichtung (132) vor dem Betätigungsorgan (124) und vor der Gegenhaltefeder (118) angeordnet ist.

15. Bürstenkopf nach Anspruch 12, **dadurch gekennzeichnet**, daß das Betätigungsorgan (128) etwa mittig zwischen der Schwenkachse (108) und der Gegenhaltefeder (118) am Tastborstenträger (88) angeordnet ist.

16. Bürstenkopf nach einem der Ansprüche 9 bis 15, **dadurch gekennzeichnet**, daß das vorzugsweise als Mikroschalter (122) oder als induktiver Schalter ausgebildete Schaltorgan an der Tragplatte (110) befestigt ist und das Betätigungsorgan (124) durch einen Bodendurchbruch (126) der Halteschiene (112) in Richtung Schaltorgan (122) hindurchgreift.

17. Bürstenkopf nach einem der Ansprüche 1 bis 16, **dadurch gekennzeichnet**, daß mindestens zwei über den Umfang der Bürstenwalze (58) verteilt angeordnete, segmentartig ausgebildete, sich zu einem Tastborstenring (86) ergänzende Tastborstenträger (86') vorgesehen sind.

18. Bürstenkopf nach Anspruch 17, **dadurch gekennzeichnet**, daß der Tastborstenring mindestens ein aus längeren biegeweichen Reinigungsborsten (142) bestehendes Borstensegment (140) enthält.

19. Bürstenkopf nach einem der Ansprüche 1 bis 18, **dadurch gekennzeichnet**, daß die Bürstenwalze aus mindestens zwei axial miteinander verbundenen, mit je einem Borstenkranz (66) bestückten Walzensektionen (58) zusammengesetzt ist, und daß im Trennbereich zwischen zwei Walzensektionen (58) und in der Nähe der Enden der Bürstenwalze jeweils ein Tastborstenträger (88) oder ein Tastborstenring (86) angeordnet ist.

20. Bürstenkopf nach einem der Ansprüche 9 bis 19, **dadurch gekennzeichnet**, daß mehrere sich am Umfang der Tragplatte (110) zu einem Ring ergänzende, nach außen offene Halteschienen (112) zur Aufnahme eines der Tastborstenträger (88) vorgesehen sind.

21. Bürstenkopf nach einem der Ansprüche 18 bis 20, **dadurch gekennzeichnet**, daß die Tastborstenträger (88) in Umfangsrichtung durch einen Freiraum (134) bildenden Abstand voneinander getrennt sind.

## Claims

1. A brush head having a brush roller (46), which is motor-driven in a predefined direction of rotation (130), carries a bristle crown (66) formed of centrifugally supported, flexurally soft bristles (104) and acts with the bristles (104) against a surface which is to be cleaned, and having at least one contact sensor (86, 88), which is disposed in recessed arrangement within the bristle crown (66), is disposed such that it is displaceable or pivotable relative to the brush roller (46) and includes rigidly elastic sensing members (102), characterized in that the contact sensor (86, 88) includes a sensing bristle carrier (88), which is jointly rotated with the brush roller and is fitted with the sensing members configured as a tuft of rigidly elastic sensing bristles (102), and a switching member (122), which can be actuated by a radial motion of the sensing bristle carrier (88), for triggering an emergency cut-out of drive units.

2. The brush head as claimed in claim 1, characterized in that the contact sensor (86, 88) includes a threshold switch, which can be set to a radial response force, for triggering an emergency off-signal.

3. The brush head as claimed in claim 1 or 2, characterized in that the bristles (102) are shorter than, preferably about half as long as the flexurally soft sensing bristles (104) of the bristle crown (66).

4. The brush head as claimed in one of claims 1 to 3, characterized in that the sensing bristle carrier (88) exhibits a preferably spring-loaded brace (118) for setting the response force of the contact sensor.

5. The brush head as claimed in one of claims 1 to 4, characterized in that the switching member is configured as a microswitch (122), which is disposed radially within the sensing bristle carrier (88).

6. The brush head as claimed in claim 5, characterized in that the sensing bristle carrier (88) supports a radially adjustable actuating member (124) for the switching member (122).

7. The brush head as claimed in one of claims 2 to 6, characterized in that the sensing bristle carrier (88) is configured as a lever, which extends over part of the circumference of the brush roller (58), the sensing bristle carrier being limitedly pivotable relative to the brush roller about an axis (108) parallel to its rotational axis (106), counter to the preferably adjustable force of a brace spring (118) and against the switching member (122).

8. The brush head as claimed in claim 7, characterized in that the sensing bristle carrier (88) is curved in the peripheral direction of the brush roller (58).

9. The brush head as claimed in one of claims 1 to 8, characterized in that the brush roller (58) is disposed concentrically to a brush shaft (56), which is motor-driven in the direction of rotation (132), and is connected thereto by radial spacers (60), which are arranged spaced apart in the peripheral direction, are rigid in the axial and radial directions and are preferably yielding in the peripheral direction, wherein on the driven brush shaft (56) there is disposed separate from the brush roller (58) in a radially protruding arrangement, at least one supporting plate (110) on the periphery of which the sensing bristle carrier (88) is attached, preferably such that it is radially displaceable in a holding rail there provided (112) or such that it is limitedly pivotable about an axis (108) parallel to the rotational axis (106) of the brush shaft (56).

10. The brush head as claimed in claim 9, characterized in that the switching member (122) is connected rigidly to the supporting plate (110).

11. The brush head as claimed in claim 9 or 10, characterized in that the holding rail (112) exhibits a U-shaped inner profile, which is open radially outward.

12. The brush head as claimed in claim 11, characterized in that the sensing bristle carrier (88) exhibits an outer profile which is matched to the inner profile of the holding rail (112).

13. The brush head as claimed in one of claims 9 to 12, characterized in that the sensing bristle carrier (88) extending in the peripheral direction is attached close to its one end (108) to the holding rail and, close to its other end, is supported by means of the brace spring (118) with adjustable pretensioning against an outer limit stop (116) of the holding rail (112).

14. The brush head as claimed in claim 13, characterized in that the swivel axis (108) of the sensing bristle carrier (88) is disposed, in the direction of rotation (132), before the actuating member (124) and before the brace spring (118).

15. The brush head as claimed in claim 12, characterized in that the actuating member (128) is disposed approximately centrally between the swivel axis (108) and the brace spring (118) on the sensing bristle carrier (88).

16. The brush head as claimed in one of claims 9 to 15, characterized in that the switching member, which is preferably configured as a microswitch (122) or inductive switch, is fastened to the supporting plate (110), and the actuating member (124) reaches through a base aperture (126) in the holding rail (112) in the direction of the switching member (122).

17. The brush head as claimed in one of claims 1 to 16, characterized in that at least two sensing bristle carriers (86') are provided, which are arranged spaced apart over the periphery of the brush roller (58) or supporting plate and are formed in a segment-like configuration and combine to form a sensing bristle ring (86).

18. The brush head as claimed in claim 17, characterized in that the sensing bristle ring contains at least one bristle segment (140) formed of longer, flexurally soft cleaning bristles (142).

19. The brush head as claimed in one of claims 1 to 18, characterized in that the brush roller is made up of at least two axially interconnected roller sections (58) fitted with a respective bristle crown (66), and wherein, in the dividing region between two roller sections (58) and close to the ends of the brush roller, there is respectively disposed a sensing bristle carrier (88) or sensing bristle ring (86).

20. The brush head as claimed in one of claims 9 to 19, characterized in that a plurality of holding rails (112) are provided for the reception of one of the sensing bristle carriers (88), which holding rails combine to form a ring on the periphery of the supporting plate (110) and are open in the outward direction.

21. The brush head as claimed in one of claims 18 to 20, characterized in that the sensing bristle carriers (88) are separated from one another in the peripheral direction by a clearance forming a free space (134).

## Revendications

1. Tête porte-brosse, comprenant une brosse cylindrique (46) motorisée entraînée dans la direction de rotation (130) prédéterminée, portant une couronne de poils (66) constituée de poils (104) souples et portés par la force centrifuge, et agissant avec les poils (104) sur une surface à nettoyer, et au moins un détecteur de proximité (86, 88) disposé en retrait à l'intérieur de la couronne de poils (66) de manière à pouvoir être déplacé ou pivoté par rapport à la brosse cylindrique (46) et muni d'organes de palpage (102) rigides et élastiques, **caractérisée en** ce que le détecteur de proximité (86, 88) comporte un support de poils de touches (88) équipé des organes de palpage constitués par des faisceaux de poils de touches (102) rigides et élastiques, et tournant avec la brosse cylindrique, et un organe de commutation (122) pour le déclenchement d'un arrêt d'urgence des groupes d'entraînement qui peut être actionné par un mouvement radial du support de poils de touches (88).

2. Tête porte-brosse selon la revendication 1, caractérisée en ce que le détecteur de proximité (86, 88) comprend un commutateur à seuil pour le déclenchement d'un signal d'arrêt d'urgence qui peut être réglé sur une force de réponse radiale.

3. Tête porte-brosse selon la revendication 1 ou 2, caractérisée en ce que les poils de touches (102) sont plus courts, de préférence de moitié environ plus courts que les poils (104) souples de la couronne de poils (66).

4. Tête porte-brosse selon l'une des revendications 1 à 3, caractérisée en ce que le support de poils de touches (88) présente une butée (118) de préférence commandée par ressort pour le réglage de la force de réponse du détecteur de proximité.

5. Tête porte-brosse selon l'une des revendications 1 à 4, caractérisée en ce que l'organe de commutation est réalisé sous la forme d'un microrupteur (122) disposé radialement à l'intérieur du support de poils de touches (88).

6. Tête porte-brosse selon la revendication 5, caractérisée en ce que le support de poils de touches (88) porte un organe de manoeuvre (124) pour l'organe de commutation (122), réglable dans le sens radial.

7. Tête porte-brosse selon l'une des revendications 2 à 6, caractérisée en ce que le support de poils de touches (88) est réalisé sous la forme d'un levier qui s'étend sur une partie de la circonférence de la brosse cylindrique (58) et peut effectuer un pivotement limité par rapport à l'axe de la brosse autour d'un axe (108) parallèle à l'axe de rotation (106) de la brosse cylindrique, contre la force de préférence réglable d'un ressort antagoniste (118), en direction de l'organe de commutation (122).

8. Tête porte-brosse selon la revendication 7, caractérisée en ce que le support de poils de touches (88) est cintré dans la direction circonférentielle de la brosse cylindrique (58).

9. Tête porte-brosse selon l'une des revendications 1 à 8, caractérisée en ce que la brosse cylindrique (58) est montée concentriquement par rapport à un arbre de brosse (56) motorisé et entrainé dans la direction de rotation (132), et couplée avec celui-ci par des écarteurs (60) radiaux répartis dans le sens circonférentiel, rigides dans les sens axial et radial et de préférence souples dans le sens circonférentiel, que sur l'arbre de brosse (56) est disposée radialement en saillie et séparée de la brosse cylindrique (58), au moins une plaque d'appui (110) sur la périphérie de laquelle le support de poils de touches (88) peut être déplacé radialement, de préférence dans un rail de retenue (112) prévu à cet endroit, ou pivoté de manière limitée autour d'un axe (108) parallèle à l'axe de rotation (106) de l'arbre de brosse (56).

10. Tête porte-brosse selon la revendication 9, caractérisée en ce que l'organe de commutation (122) est solidaire de la plaque d'appui (110).

11. Tête porte-brosse selon la revendication 9 ou 10, caractérisée en ce que le rail de retenue (112) présente un profil intérieur en U radialement ouvert vers l'extérieur.

12. Tête porte-brosse selon la revendication 11, caractérisée en ce que le support de poils de touches (88) présente un profil extérieur adapté au profil intérieur du rail de retenue (112).

13. Tête porte-brosse selon l'une des revendications 9 à 12, caractérisée en ce que le support de poils de touches (88) s'étendent dans la direction circonférentielle est articulé à proximité de l'une (108) de ses extrémités sur le rail de retenue et s'appuie à proximité de son autre extrémité, par l'intermédiaire du ressort antagoniste (118) à précontrainte réglable, sur une butée de limitation extérieure (116) du rail de retenue (112).

14. Tête porte-brosse selon la revendication 13, caractérisée en ce que l'axe de pivotement (108) du support de poils de touches (88) est disposé dans la direction de rotation (132) devant l'organe de manoeuvre (124) et devant le ressort antagoniste (118).

15. Tête porte-brosse selon la revendication 12, caractérisée en ce que l'organe de manoeuvre (128) est disposé sensiblement au milieu entre l'axe de pivotement (108) et le ressort antagoniste (118) sur le support de poils de touches (88).

16. Tête porte-brosse selon l'une des revendications 9 à 15, caractérisée en ce que l'organe de commutation conformé de préférence en microrupteur (122) ou en commutateur inductif est fixé sur la plaque d'appui (110), et que l'organe de manoeuvre (124) passe au travers d'un percement (126) dans le fond du rail de retenue (112), en direction de l'organe de commutation (122).

17. Tête porte-brosse selon l'une des revendications 1 à 16, caractérisée en ce qu'elle comprend au moins deux supports de poils de touches (86') répartis sur la circonférence de la brosse cylindrique (58), conformés en segments et se complétant en un anneau de poils de touches (86).

18. Tête porte-brosse selon la revendication 17, caractérisée en ce que l'anneau de poils de touches comprend au moins un segment de poils (140) constitué de poils de nettoyage (142) souples plus longs.

19. Tête porte-brosse selon l'une des revendications 1 à 18, caractérisée en ce que la brosse cylindrique est assemblée à partir d'au moins deux sections de cylindre (58) couplées axialement et équipées chacune d'une couronne de poils (66), et que dans la zone de séparation entre deux sections de cylindre (58) et à proximité des extrémités de la brosse cylindrique, est disposé respectivement un support de poils de touches (88) ou un anneau de poils de touche (86).

20. Tête porte-brosse selon l'une des revendications 9 à 19, caractérisée en ce qu'elle comprend pour la réception de l'un des supports de poils de touches (88), plusieurs rails de retenue (112) ouverts vers l'extérieur qui se complètent en un anneau sur la périphérie de la plaque d'appui (110).

21. Tête porte-brosse selon l'une des revendications 18 à 20, caractérisée en ce que les supports de poils de touches (88) sont séparés dans la direction circonférentielle par un intervalle formant un espace libre (134).
